# EUROPEAN PATENT APPLICATION

(11) **EP 4 411 694 A1**
(43) Date of publication of application: **07.08.2024**
(21) Application number: 23305157.2
(22) Date of filing: 06.02.2023
(51) Int. Cl.: G08G 1/16, B60W 40/09, B60W 50/14, B60W 30/095

(54) **METHOD FOR ALERTING A DRIVER OF A VEHICLE**

(71) Applicant: TOYOTA JIDOSHA KABUSHIKI KAISHA, Aichi-Ken 471-8571 (JP)
(72) Inventor: GIROND, Paul, 1140 BRUSSELS (BE); KIKUCHI, Asako, 1140 BRUSSELS (BE); KINUGASA, Hidenobu, 1140 BRUSSELS (BE); CACCIA DOMINIONI, Giancarlo, 1140 BRUSSELS (BE)
(74) Representative: Cabinet Beau de Loménie

(57) **Abstract**

A method for alerting a driver of a first vehicle, the method being performed by a tailgating system alert equipping the first vehicle and comprising:
- detecting (300) a second vehicle located behind the first vehicle,
- determining (310) whether or not a first condition is met based on contextual data associated with the first vehicle and/or the second vehicle,
- determining (320) whether or not a second condition different from the first condition is met based on contextual data associated with the first vehicle and/or the second vehicle,
- transmitting or not (330) at least one alert signal to the driver depending on the determination results respectively associated with the first and second conditions.

## Description

### 1. Field of the Invention

The invention relates to the general field of vehicle driving assistance for detecting and alerting a driver of unsafe driving conditions. More particularly, it relates to a method and a device for controlling the activation of a tailgating alert system equipping a vehicle. The invention finds a particularly advantageous application, although not limiting, in assisting a vehicle driving on lanes on which the authorized speed is high, e.g. on a highway.

### 2. Description of Related Art

Modem vehicles include a variety of sensors and intelligence systems to improve the safety of driving. For example, airbags, crash preparation systems, or the like can improve the outcome for vehicle passengers in the case of an accident. Furthermore, modern vehicles can also include intelligence systems that improve safety of drivers. For example, modem vehicles can include advanced driver assistance systems (ADAS) that provide driving assistance such as lane assist, adaptive cruise control, auto-pilot, or the like.

More recently, systems have also been proposed to improve safety in case of tailgating (hereinafter referred to as "tailgaiting alert systems"). Indeed, when two vehicles are driving in the same lane and are too close to each other, it creates a dangerous situation for both vehicles. Specifically, when driving, a safe distance between two vehicles is generally considered to be the distance that the rear vehicle would cover to reach the front vehicle, for example in at least three seconds. If this safe distance is not respected, there is potentially inadequate time to react and brake in the case the lead vehicle comes to an abrupt stop.

The conventional operation of these tailgaiting alert systems is to first detect a rear vehicle, and then to determine whether a condition is satisfied or not, this condition being satisfied if a distance and/or a time-to-collision (TTC) indicator and/or a time headway (THW) indicator between the front and rear vehicles is below a given threshold. As a reminder, the TTC indicator is defined as the time required for two vehicles to collide if they continue at their current speed and remain on the same path (lane). The THW indicator is defined as the elapsed time between the front of the front vehicle passing a point on the roadway and the front of the rear vehicle passing the same point.

Thus, when a tailgating alert system is activated, due to the violation of said threshold, one or more alert signals are transmitted to the driver of the front vehicle, such as a visual signal displayed on the vehicle's dashboard and/or a sound signal. Even more sophisticated systems can, for example, alert local authorities (e.g. the police) when the rear vehicle is in a situation that is deemed to be very dangerous.

However, such tailgating alert systems are still far from being considered as sufficiently efficient. Indeed, the condition to be met (i.e. distance and/or a TTC indicator below a given threshold) is very restrictive since the only criteria taken into account when evaluating the tailgating situation are the distance and/or the TTC indicator, which may lead to an inappropriate emission of an alert signal. Such an inappropriate signal emission can be perceived as a source of stress by the driver of the vehicle, which ultimately defeats the original purpose of providing safe driving conditions.

### SUMMARY OF THE INVENTION

The purpose of the present invention is to overcome all or some of the limitations of the prior art, particularly those outlined here above, by providing a solution for controlling the transmission of at least one alert signal to the driver of a vehicle in a more efficient way than prior art solutions.

By "more efficiently", one refers here to a solution able to alert the driver of a vehicle in an appropriate way, so as to minimize the stress caused by a tailgating situation and thus further improve safe driving conditions as well as proper operation of the vehicle.

To this end, and according to a first aspect, the invention relates to a method for alerting a driver of a first vehicle, the method being performed by a tailgating system alert equipping the first vehicle and comprising the steps of:
- detecting a second vehicle located behind the first vehicle,
- determining whether or not a first condition is met based on contextual data associated with the first vehicle and/or the second vehicle,
- determining whether or not a second condition different from the first condition is met based on contextual data associated with the first vehicle and/or the second vehicle,
- transmitting or not at least one alert signal depending on the determination results respectively associated with the first and second conditions.

Thus, the alert method according to the invention is not limited to the implementation of these two steps of detecting the second vehicle and evaluating the first condition. On the contrary, it advantageously proposes to evaluate a second condition different from the first condition, this second condition being also based on contextual data associated with the first vehicle and/or the second vehicle.

As a consequence, contrary to the prior art solutions, the aim here is to avoid issuing an alert signal prematurely, which may result in stress for the driver and thus degrade the driving conditions. The general idea is rather to refine the evaluation of the driving situation of the first vehicle through the combination of the first and second conditions, in order to judge in a relevant way the opportunity or not to transmit at least one alert signal.

In particular embodiments, the alert method may furthermore include one or more of the following features, taken alone or in any technically feasible combination.

According to particular embodiments, the first condition is met if a distance and/or a time-to-collision indicator and/or a time headway indicator between the first and second vehicles is below a threshold.

According to particular embodiments, said at least one alert signal comprises at least one of an audio, visual or haptic alert signal.

According to particular embodiments, the second condition is met if the first vehicle is able to accelerate, the contextual data comprising at least one of:
- an indicator of a speed limit for the first vehicle,
- an indicator of at least one obstacle detected in front of the first vehicle,
- an indicator of at least one road event detected on the path of the first vehicle,
   and:
- if the second condition is met, no alert signal is transmitted, or
- if the second condition is met, at least one alert signal is transmitted with a lower intensity and/or with a later transmission time than the intensity and/or transmission time used when the second condition is not met.

According to particular embodiments, the second condition is met if the first vehicle is able to change lane, the contextual data comprising at least one of:
- an indicator of another vehicle detected in a lane adjacent to the lane of the first vehicle,
- an indicator of ground markings detected for the first vehicle's lane and/or for one or more lanes distinct from the first vehicle's lane,
- an indicator of overtaking rules for the first vehicle,
   and:
- if the second condition is met, no alert signal is transmitted, or
- if the second condition is met, at least one alert signal is transmitted with a lower intensity and/or with a later transmission time than the intensity and/or transmission time used when the second condition is not met.

According to particular embodiments, the second condition is met if the second vehicle is changing or intends to change lane, the contextual data comprising at least one of:
- an indicator of a blinker activation by the second vehicle,
- an indicator of a lane change of the second vehicle,
- an indicator of a predicted lane change for the second vehicle,
   and:
- if the second condition is met, no alert signal is transmitted, or
- if the second condition is met, at least one alert signal is transmitted with a lower intensity and/or with a later transmission time than the intensity and/or transmission time used when the second condition is not met.

According to particular embodiments, the second condition is met if an attention level of the driver of the first vehicle is above a threshold, the contextual data comprising at least one of:
- an indicator of an active gaze of the driver of the first vehicle on the rear road,
- an indicator of an active gaze of the driver of the first vehicle on the front road,
   and:
- if the second condition is met, no alert signal is transmitted, or
- if the second condition is met, at least one alert signal is transmitted with a lower intensity and/or with a later transmission time than the intensity and/or transmission time used when the second condition is not met.

According to particular embodiments, the active gaze to the rear or front road is evaluated by comparing a time between two driver gazes to the rear or front of the first vehicle.

According to particular embodiments, the second condition is met if the speed of the first vehicle differs from a threshold, the contextual data comprising an indicator of the speed of the first vehicle, and:
- if the second condition is met due to the speed of the first vehicle being above said threshold, at least one alert signal is transmitted with a first transmission time earlier than the transmission time used in case the second condition is not met, or
- if the second condition is met due to a speed of the first vehicle below said threshold, at least one alert signal is transmitted with a second transmission time later than the transmission time used in case the second condition is not met.

According to particular embodiments, the second condition is met if degraded environmental conditions for driving are detected, the contextual data comprising at least one of:
- an indicator of a detected night time,
- an indicator of detected rain,
- an indicator of detected snow,
- an indicator of detected fog,
- an indicator of degraded visibility,
and wherein, if the second condition is met, at least one alert signal is transmitted with a higher intensity and/or with an earlier transmission time than the intensity and/or transmission time used when the second condition is not met.

According to particular embodiments, the second condition is met if the second vehicle belongs to a group of given vehicles, the contextual data comprising at least one of:
- an indicator of the second vehicle belonging to a special group comprising, for example, an ambulance, a fire brigade vehicle, a police vehicle,
- an indicator of the second vehicle identified as having activated flashing lights,
and wherein, if the second condition is met, at least one alert signal is transmitted with a higher intensity and/or with an earlier transmission time than the intensity and/or transmission time used when the second condition is not met.

According to a second aspect, the invention also relates to a computer program comprising instructions which, when the program is executed by a computer, cause the computer to perform an alert method according to the invention.

This computer program can use any programming language and take the form of source code, object code or a code intermediate between source code and object code, such as a partially compiled form, or any other desirable form.

According to a third aspect, the invention also relates to a computer-readable medium comprising instructions which, when executed by a computer, cause the computer to perform an alert method according to the invention.

The computer-readable medium can be any entity or device capable of storing the computer program. For example, the medium can include storage means such as a ROM, for example a CD ROM or a microelectronic circuit ROM, or magnetic storage means, for example a hard disk.

Alternatively, the computer-readable medium can be an integrated circuit in which the computer program is incorporated, the circuit being adapted to execute the alert method or to be used in its execution.

According to a fourth aspect, the invention also relates to a tailgating alert system comprising means configured to perform an alert method according to the invention.

According to a fifth aspect, the invention also relates to a vehicle comprising a tailgating alert system according to the invention.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a particular embodiment of a first vehicle equipped with a tailgating alert system 110 according to the invention ; and
FIG. 2 illustrates an example of the hardware architecture of a tailgating alert system for performing an alert method according to the invention; and
FIG. 3 is a flowchart of the main steps of the alert method according to an embodiment of the invention; and
FIG. 4 is a flowchart of a first particular embodiment of the alert method; and
FIG. 5 is a flowchart of a second particular embodiment of the alert method; and
FIG. 6 is a flowchart of a third particular embodiment of the alert method; and
FIG. 7 is a flowchart of a fourth particular embodiment of the alert method; and
FIG. 8 is a flowchart of a fifth particular embodiment of the alert method; and
FIG. 9 is a flowchart of a sixth particular embodiment of the alert method; and
FIG. 10 is a flowchart of a seventh particular embodiment of the alert method.

### DETAILED DESCRIPTION OF EMBODIMENTS

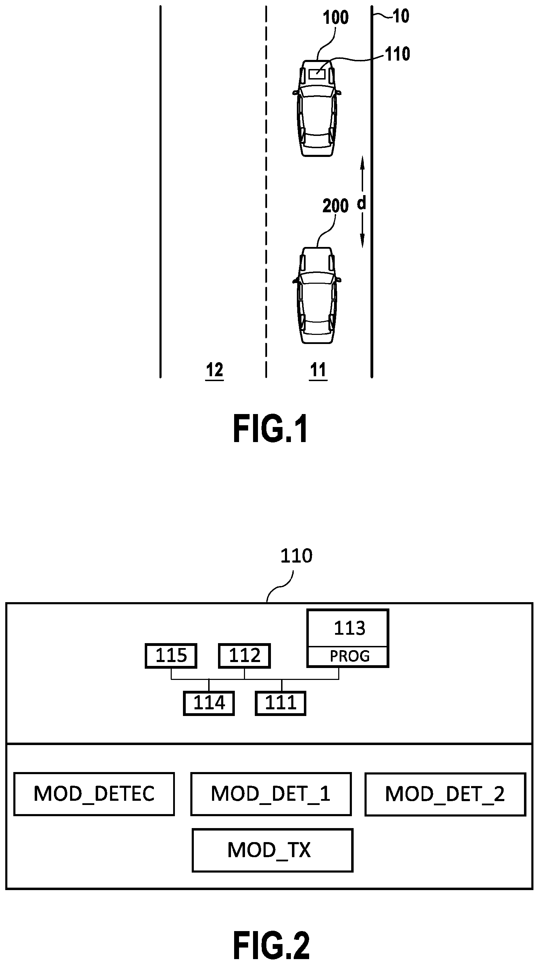

FIG. 1 illustrates a particular embodiment of a first vehicle 100 equipped with a tailgating alert system 110 according to the invention.

In FIG. 1, the first vehicle 100 is shown in its environment while driving in a first lane 11 of a road 10 (e.g. a highway) also having a second lane 12. Furthermore, the first vehicle 100 is followed by a second vehicle 200 driving in the first lane 11 and being at a distance d from the first vehicle 100. It should be noted that considering that the second vehicle 200 is in the same lane 11 as the first vehicle 100 is not a limitation of the invention, as long as the second vehicle 200 is behind the first vehicle 100.

In the following description, the first vehicle 100 is specifically considered to be a car. However, it should be noted that this is not a limitation of the invention, and any type of vehicle can be contemplated, including trucks, sport utility vehicles, etc. Moreover, the vehicle can include electric vehicles, vehicles with internal combustion engines, hybrid vehicles and other types of vehicles.

The first vehicle 100 comprises acquisition means (not shown in the figures) configured to acquire one or more types of data relating to the environment of said first vehicle 100. By "environment of the first vehicle 100", one refers here to the driving context (e.g. the driving situation) in which the first vehicle 100 is operating at a given time, so that the data acquired are hereinafter referred to as "contextual data".

This context may be directly related to the first vehicle 100. Thus, it may take into account the first vehicle 100 as such and/or the driver of the vehicle and/or the road environment (road topology, traffic signs, road traffic conditions, etc.).

Alternatively, or additionally, the context may be related to the second vehicle 200, in particular its position or driving style as described in more detail later.

In general, there are no limitations on the contextual data that can be considered in the context of the present invention.

The contextual data acquisition means may comprise hardware and software means of different types, depending on the contextual data to be acquired. Thus, for example, the contextual data acquisition means may comprise one or more types of sensors that provide information about the vehicles (e.g. the first vehicle 100 and/or the second vehicle 200) and surrounding areas. For example, the contextual data acquisition means may include sonar, cameras (e.g. rear/front cameras, panoramic view monitor cameras), other imaging devices, or additional sensors that scan an area surrounding the car, a rear radar system, etc. The rear radar, for example, can detect objects in a field of view to the rear of the first vehicle 100 (e.g. the rear radar may have a range of approximatively 50 meters).

In addition, and in a conventional manner, the contextual data acquisition means are integrated into an acquisition chain which may also conventionally comprise elements other than those described above. For example, the acquisition chain may also include an electronic acquisition card configured to condition an electrical signal supplied by a sensor. The conditioning implemented by the acquisition card comprises, for example, amplification and/or filtering. Optionally, the acquisition chain may also include, at the output, an analogue/digital converter configured to digitise a conditioned electrical signal.

In general, the configuration of the contextual data acquisition means is well known to the skilled person, and is therefore not detailed here further. In particular, the skilled person knows how to choose appropriate acquisition means for a particular type of contextual data to be acquired, for example in the catalogues of products offered by specialised manufacturers. The skilled person can also position these acquisition means to acquire the desired contextual data. Additional examples of contextual data acquisition means are described later in connection with different embodiments of the invention.

The tailgating alert system 110 of the first vehicle 100 is configured to use at least part of the contextual data that have been acquired to determine whether a vehicle is tailgating, in accordance with what is known in the prior art and what has already been described previously. In addition to these functionalities, and advantageously with respect to the solutions known in the prior art, the tailgating alert system 110 is also configured to perform, on the basis of acquired contextual data, other processing aimed at evaluating in a very fine manner whether it is appropriate to transmit at least one alert signal to the driver of the first vehicle 100, by implementing an alert method according to the invention.

FIG. 2 illustrates an example of the hardware architecture of the tailgating alert system 110 for performing said alert method.

As shown in FIG. 2, the tailgating alert system 110 has the hardware architecture of a computer and comprises, in particular, a processor 111, a random access memory 112, a read-only memory 113, a non-volatile memory 114 and communication means 115.

The read-only memory 113 of the tailgating alert system 110 constitutes a recording medium according to the invention, which is readable by processor 111 and on which is recorded a computer program PROG according to the invention, containing instructions for performing steps of the alert method. The program PROG defines functional modules of the tailgating alert system 110, which are based on or control the aforementioned elements 111 to 115 of the tailgating alert system 110. These functional modules are illustrated in FIG. 2 in a non-limiting way, and are described in more detail below with reference to the implementation of the alert method.

The communication means 115 allow the tailgating alert system 110 to receive acquired contextual data, but also to transmit one or more alert signals to the driver of the first vehicle 100. These communication means 5 are based, in a manner known per se, on a communication interface capable of exchanging data between the tailgating alert system 110 and the contextual data acquisition means, as well as devices configured to receive the alert signal(s) and process them. No limitation is attached to the nature of this communication interface, which can be wired or non-wired, so as to allow the exchange of data according to any protocol known to the skilled person (e.g. CAN bus).

It should be noted that there is no limitation on the nature of the alert signal(s) that may be transmitted. For example, an audio alert signal may be transmitted to audio broadcasting means of the first vehicle 100, such as speakers integrated into the cabin. According to another example, a visual alert signal may be transmitted to display means of the first vehicle 100, such as a dashboard so as to display a luminous icon. According to yet another example, a haptic alert signal may be transmitted to an equipment of the first vehicle 100, such as a seat belt used by the driver, so as to generate a physical stimulus (e.g. a vibration).

Of course, the invention is not limited by the number of alert signals that can be transmitted, and nothing excludes contemplating the emission of a single alert signal or of several alert signals simultaneously, which may be of different types in whole or in part.

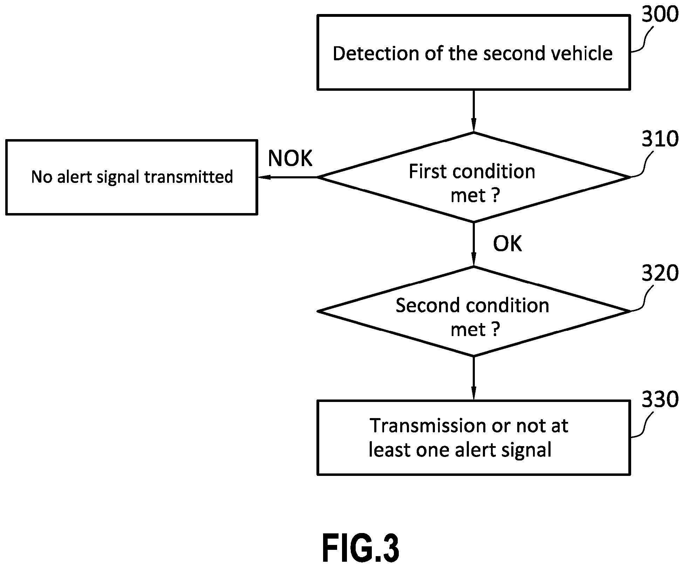

FIG. 3 is a flowchart of the main steps of the alert method according to an embodiment of the invention, these steps being carried out by the tailgating alert system 110 of FIG. 2.

The alert method is more particularly described with reference to driving conditions corresponding to those illustrated in FIG. 1, namely that the second vehicle 200 is located behind the first vehicle 100 at a distance d in the same first lane 11, and continues to approach.

As shown in FIG. 3, the alert method comprises a first step 300 of detecting the second vehicle 200. Said step 300 is performed by a detection module MOD_DETEC belonging to the tailgating alert system 110.

This detection of the approaching second vehicle 200 is performed based on (i.e. using) contextual data acquired by sensor(s), as for example the sensors described above (e.g. radars, sonars, imaging devices, thermal imaging devices, or the like).

Based on the output of one or more sensors, and as part of the detection step 300, the tailgating alert system 110 can determine an indication of the distance d of the approaching vehicle 200, a speed of the approaching vehicle 200, or still other information about the approaching vehicle 200 (e.g. size). The speed of the second vehicle 200 approaching from the rear can indicate whether it is moving faster or slower than the first vehicle 100 that includes the tailgating alert system 110.

The alert method also comprises a step 310 of determining whether or not a first condition is met, said first condition being met if the distance d and/or a time-to-collision (TTC) indicator between the first and second vehicles 100, 200 is below a threshold. Said step 310 is performed by a first determination module MOD_DET_1 belonging to the tailgating alert system 110.

In its general principle, the implementation of these two steps 300, 310 allows the tailgating alert system 110 to determine if there is a safe distance between the vehicles 100, 200. This implementation is consistent with what is already achieved in the prior art, so it is not described further. In particular, it is understood that if the first condition is not met, then no alert signal is transmitted.

In any case, the alert method according to the invention is not limited to the implementation of these two steps 300, 310, and advantageously proposes in the present embodiment, in the case where the first condition is satisfied, to test a second condition different from the first condition, this second condition being based on contextual data associated with the first vehicle and/or the second vehicle. Thus, contrary to the prior art solutions, the aim here is to avoid issuing an alert signal prematurely, which may result in stress for the driver and thus degrade the driving conditions. The general idea is rather to refine the evaluation of the driving situation of the first vehicle 100, in order to judge in a relevant way the opportunity or not to transmit at least one alert signal.

In practice, and as shown on FIG. 3, the alert method further comprises, if the first condition is met, a step 320 of determining whether or not said second condition is met. Said step 320 is performed by a second determination module MOD_DET_2 belonging to the tailgating alert system 110.

Thereafter, the alert method comprises a step 330 of transmitting or not at least one alert signal to the driver of the first vehicle 100 depending on the result of the determination associated with the second condition. Said step 330 is performed by a transmission module MOD_TX belonging to the tailgating alert system 110.

More specific embodiments of the alert method will now be described, in order to explain which contextual data can be taken into account in the evaluation of the second condition, but also what this second condition can consist of and to what extent it can be considered to be satisfied or not.

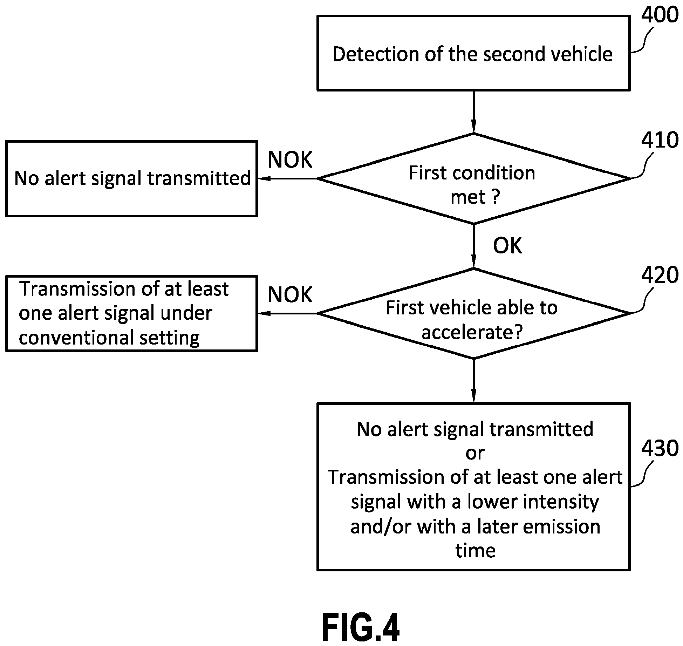

FIG. 4 is a flowchart of a first particular embodiment of the alert method. In this flowchart, steps 400 and 410 are equivalent to steps 300 and 310 described above in relation with FIG. 3.

According to said first particular embodiment, the second condition is met if the first vehicle 100 is able to accelerate (step 420). The assessment of this ability to accelerate is based on contextual data comprising at least one of:
- an indicator of a speed limit for the first vehicle 100, e.g. a speed limit indicated by a traffic sign,
- an indicator of at least one obstacle detected in front of the first vehicle 100, e.g. an obstacle corresponding to a front objet,
- an indicator of at least one road event detected on the path of the first vehicle 100, e.g. a road event corresponding to a traffic light, a traffic jam, a roundabout, a merge (i.e. merging lanes or roads).

It should be noted that the nature of an indicator does not constitute a limitation of the invention. For example, it is possible to acquire by means of a camera an image of a traffic sign indicating a speed limit, this image being processed by the acquisition chain in order to generate, as an indicator, digital data representing the value of this speed limit indicated on the traffic sign. According to another example, it is possible to acquire an image of a front object using a camera, this image being processed by the acquisition chain to generate, as an indicator, a bit representative of the presence of this front object.

Furthermore, for said first particular embodiment of FIG. 4, it is possible to contemplate different situations of transmitting one or more alert signals depending on the result of the evaluation of the second condition (step 430).

For example, if the second condition is met, no alert signal is transmitted by the tailgating alert system 110.

According to another example, if the second condition is met, at least one alert signal is transmitted with a lower intensity and/or with a later transmission time than the intensity and/or transmission time used when the second condition is not met.

It should be noted that if the second condition is not met, i.e. if the first vehicle 100 is unable to accelerate, for example because a traffic jam is detected further along its path, then at least one alert signal is transmitted under "conventional setting" in terms of intensity and/or transmission time to alert the driver of potentially dangerous driving conditions. By "conventional setting", one refers here to the setting classically used in the tailgating alert systems of the prior art, i.e. the setting used when the first condition is the only one taken into account.

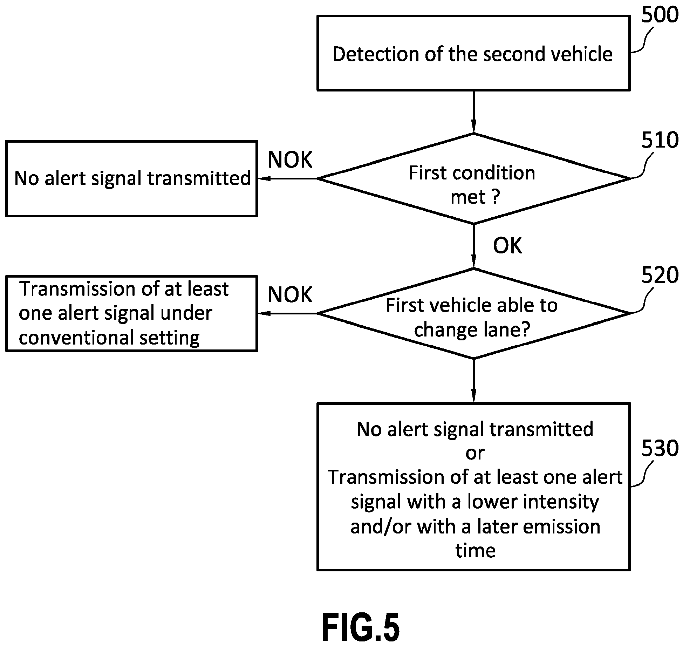

FIG. 5 is a flowchart of a second particular embodiment of the alert method. In this flowchart, steps 500 and 510 are equivalent to steps 300 and 310 described above in relation with FIG. 3.

According to said second particular embodiment, the second condition is met if the first vehicle 100 is able to change lane (step 520). The assessment of this ability to change lane is based on contextual data comprising at least one of:
- an indicator of another vehicle detected in a lane adjacent to the lane of the first vehicle 100 (i.e. in the second lane 12 adjacent to the first lane 11),
- an indicator of ground markings detected for the first vehicle's lane 11 and/or for one or more lanes distinct from the first vehicle's lane 11, e.g. ground markings corresponding to a full line, a dot line, a dash line, a color line,
- an indicator of overtaking rules for the first vehicle 100, e.g. overtaking rules corresponding to no overtaking traffic sign, country's traffic regulations, driving rules, cloud flag (i.e. traffic condition information stored on the cloud) .

Furthermore, for said second particular embodiment of FIG. 5, it is possible to contemplate different situations of transmitting one or more alert signals depending on the result of the evaluation of the second condition (step 530).

For example, if the second condition is met, no alert signal is transmitted by the tailgating alert system 110.

According to another example, if the second condition is met, at least one alert signal is transmitted with a lower intensity and/or with a later transmission time than the intensity and/or transmission time used when the second condition is not met (it being understood that if the second condition is not met, i.e. if the first vehicle 100 is unable to change lane, then at least one alert signal is transmitted under conventional setting in terms of intensity and/or transmission time to alert the driver of potentially dangerous driving conditions).

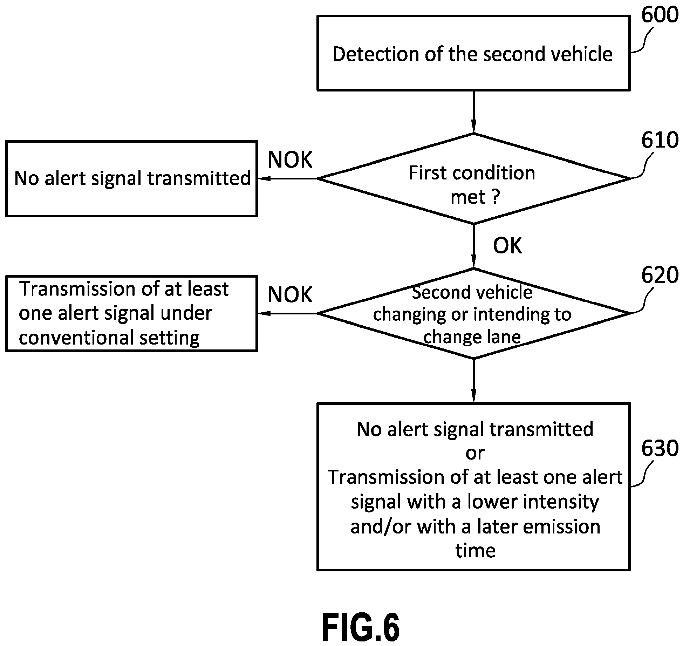

FIG. 6 is a flowchart of a third particular embodiment of the alert method. In this flowchart, steps 600 and 610 are equivalent to steps 300 and 310 described above in relation with FIG. 3.

According to said third particular embodiment, the second condition is met if the second vehicle 200 is changing or intends to change lane (step 620), the contextual data comprising at least one of:
- an indicator of a blinker activation by the second vehicle 200, e.g. a detection with a camera of a blinker activation,
- an indicator of a lane change of the second vehicle 200, e.g. a lane detected by means of a V2X system (acronym of the expression "Vehicle-to-Everything") implemented in the first vehicle 100,
- an indicator of a predicted lane change for the second vehicle 200, e.g. a lane change predicted by means of data comprising past trajectory and map information.

Furthermore, for said third particular embodiment of FIG. 6, it is possible to contemplate different situations of transmitting one or more alert signals depending on the result of the evaluation of the second condition (step 630).

For example, if the second condition is met, no alert signal is transmitted by the tailgating alert system 110.

According to another example, if the second condition is met, at least one alert signal is transmitted with a lower intensity and/or with a later transmission time than the intensity and/or transmission time used when the second condition is not met (it being understood that if the second condition is not met, i.e. if the second vehicle 200 does not change or intend to change lane, then at least one alert signal is transmitted under conventional setting in terms of intensity and/or transmission time to alert the driver of potentially dangerous driving conditions).

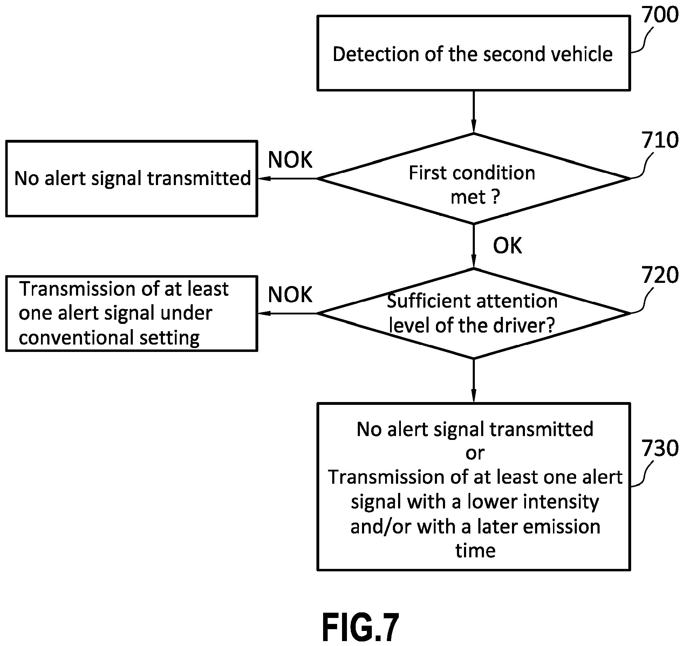

FIG. 7 is a flowchart of a fourth particular embodiment of the alert method. In this flowchart, steps 700 and 710 are equivalent to steps 300 and 310 described above in relation with FIG. 3.

According to said fourth particular embodiment, the second condition is met if an attention level of the driver of the first vehicle 100 is above a threshold (step 720).

Generally speaking, the implementation of this fourth particular embodiment aims at verifying that the driver's attention is sufficient for him to be able to quickly take note of information related to the driving environment. To this end, the contextual data comprises at least one of:
- an indicator of an active gaze of the driver of the first vehicle 100 on the rear road,
- an indicator of an active gaze of the driver of the first vehicle 100 on the front road.

For example, the active gaze to the rear or front road is evaluated by comparing a time between two driver gazes to the rear or front of the first vehicle (e.g. if there is no driver's gaze to the rear road for two seconds after the detection of the second vehicle 200, thus it may be considered that the attention of the driver is not sufficient). This evaluation may be performed by any known means, such as means for detecting the driver's gaze (e.g. detection of pupil movement) integrated in the cabin of the first vehicle 100 (e.g. in a front windshield and/or a rear-view mirror).

Furthermore, for said fourth particular embodiment of FIG. 7, it is possible to contemplate different situations of transmitting one or more alert signals depending on the result of the evaluation of the second condition (step 730).

For example, if the second condition is met, no alert signal is transmitted by the tailgating alert system 110. This use case is for example implemented in a situation where the driver is strongly focusing on the front, so that the tailgating alert system 110 should judge that there is no need to distract the driver. Of course, such an implementation does not exclude more specific alternatives where, if the driving situation becomes critical, an alert signal should still be transmitted to the driver.

According to another example, if the second condition is met, at least one alert signal is transmitted with a lower intensity and/or with a later transmission time than the intensity and/or transmission time used when the second condition is not met (it being understood that if the second condition is not met, i.e. if the attention level of the driver of the first vehicle 100 is not sufficient, then at least one alert signal is transmitted under conventional setting in terms of intensity and/or transmission time to alert the driver of potentially dangerous driving conditions).

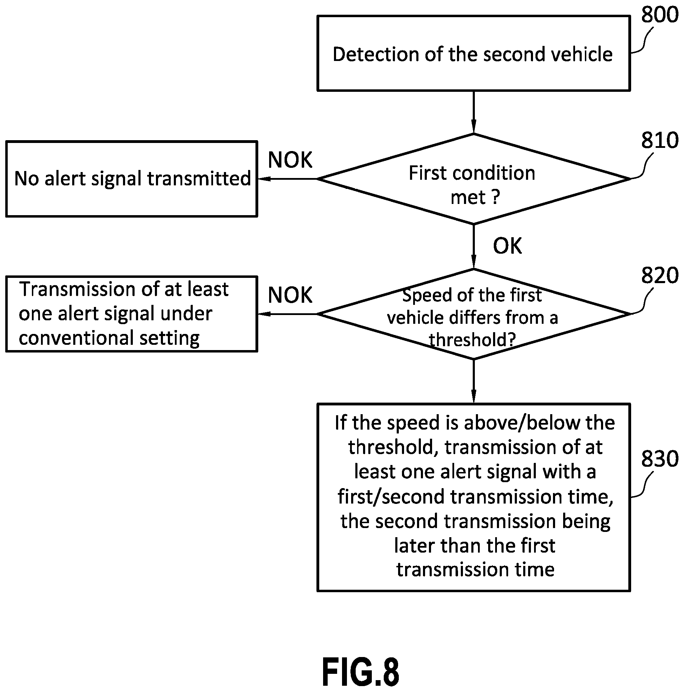

FIG. 8 is a flowchart of a fifth particular embodiment of the alert method. In this flowchart, steps 800 and 810 are equivalent to steps 300 and 310 described above in relation with FIG. 3.

According to said fifth particular embodiment, the second condition is met if the speed of the first vehicle 100 differs from a threshold (step 820), the contextual data comprising an indicator of the speed of the first vehicle 100.

Furthermore, for said fifth particular embodiment of FIG. 8, the result of the evaluation of the second condition (step 830) implies that:
- if the second condition is met due to the speed of the first vehicle being above said threshold, at least one alert signal is transmitted with a first transmission time earlier than the transmission time used in case the second condition is not met, or
- if the second condition is met due to a speed of the first vehicle below said threshold, at least one alert signal is transmitted with a second transmission time later than the transmission time used in case the second condition is not met.

That the second transmission is later than the transmission used in case the second condition is not met (and a fortiori than the first transmission time) follows from the observation that if the first vehicle 100 is driving at a high speed and the second vehicle 200 is catching up, this means that the second vehicle 200 is driving at an even higher speed, which represents a more dangerous situation than that where the first vehicle 100 is driving at a lower speed. In other words, in this embodiment, the speed of the first vehicle 100 (and also the distance d between the first vehicle 100 and the second vehicle 200 through the first condition) is taken into account to evaluate whether a situation is dangerous or not, and thus to alert the driver earlier (case where the first vehicle 100 is driving fast) or later (case where the first vehicle 100 is driving slow). It should also be noted that the threshold that is used in the evaluation of the second condition can be fixed or dynamic, i.e. depending on different parameters such as the speed of the first vehicle 100 and the detected distance d.

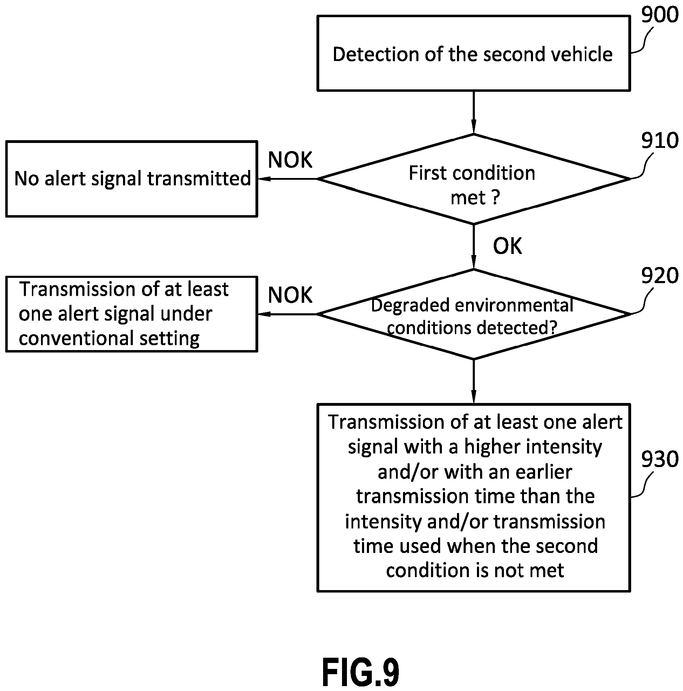

FIG. 9 is a flowchart of a sixth particular embodiment of the alert method. In this flowchart, steps 900 and 910 are equivalent to steps 300 and 310 described above in relation with FIG. 3.

According to said sixth particular embodiment, the second condition is met if degraded environmental conditions for driving are detected (step 920), the contextual data comprising at least one of:
- an indicator of a detected night time,
- an indicator of detected rain,
- an indicator of detected snow,
- an indicator of detected fog,
- an indicator of degraded visibility.

Furthermore, for said sixth particular embodiment of FIG. 8, the result of the evaluation of the second condition (step 930) implies that, if the second condition is met, at least one alert signal is transmitted with a transmission time earlier than the transmission time used in case the second condition is not met.

Said sixth particular embodiment can be implemented using any technique known to the skilled person to detect and qualify degraded environmental conditions for driving. For example, the tailgating alert system 110 can use contextual data acquired by temperature sensors, light sensors, or other available sensors. For some embodiments, the tailgating alert system 110 can also receive real-time weather information over a wireless network.

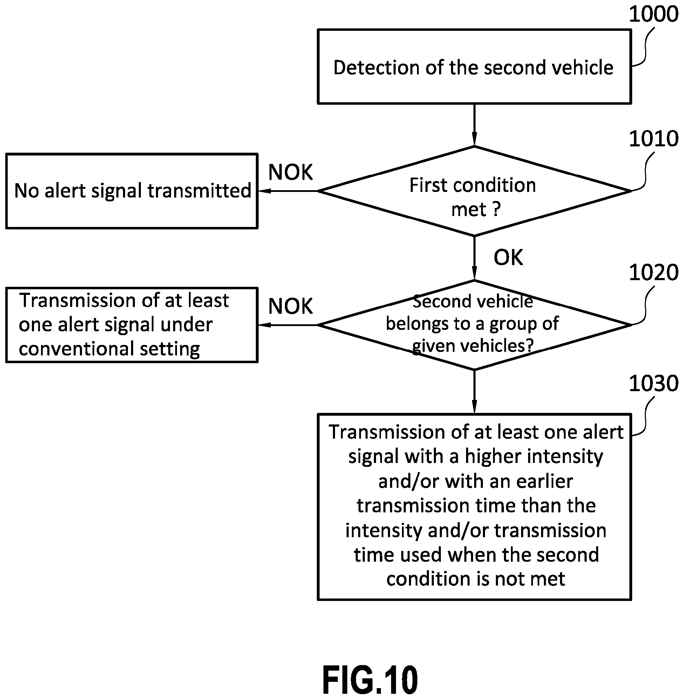

FIG. 10 is a flowchart of a seventh particular embodiment of the alert method. In this flowchart, steps 1000 and 1010 are equivalent to steps 300 and 310 described above in relation with FIG. 3.

According to said seventh particular embodiment, the second condition is met if the second vehicle 200 belongs to a group of given vehicles (step 1020), the contextual data comprising at least one of:
- an indicator of the second vehicle 200 belonging to a special group comprising, for example, an ambulance, a fire brigade vehicle, a police vehicle,
- an indicator of the second vehicle 200 identified as having activated flashing lights.

Furthermore, for said seventh particular embodiment of FIG. 10, the result of the evaluation of the second condition (step 1030) implies that, if the second condition is met, at least one alert signal is transmitted with a higher intensity (e.g. with the maximum possible intensity) and/or with an earlier transmission time than the intensity and/or transmission time used when the second condition is not met.

The alert method has been described so far by considering different particular embodiments (FIGS 4-10) separately. However, these provisions are not limiting of the invention, which also covers embodiments in which one or more of said particular embodiments of FIGS 4-10 are combined with each other. In practice, this amounts to considering a second condition defined according to one or more of the following criteria: the ability of the first vehicle 100 to accelerate, the ability of the first vehicle 100 to change lanes, the fact that the second vehicle 200 is changing or intends to change lanes, a sufficient level of attention of the driver of the first vehicle 100, the speed of the first vehicle 100, the detection of degraded environmental conditions for driving, the belonging of the second vehicle 200 to a group of given vehicles. Of course, it is understood that when several of these criteria are taken into account in the definition of the second condition, the contextual data respectively associated with them are also taken into account.

The invention has also been described so far considering that the first condition relates to the distance and/or the time-to-collision indicator and/or the time headway indicator. However, these considerations are not limitative of the invention, which covers still other embodiments in which the first condition corresponds or derives from one or more of the conditions described with reference to FIGS. 4-10 and where the second condition relates to the distance and/or the time-to-collision indicator and/or the time headway indicator. Even more generally, it is possible to contemplate embodiments in which the first condition and the second condition each relate to one or more of the conditions described with reference to FIGS. 4-10. In other words, what is most important is to have two conditions that are based on contextual data associated with the first vehicle and/or the second vehicle and that differ from each other.

It follows from the above that the features according to which the evaluation of the second condition is implemented if the first condition is met are not limiting to the invention either. Indeed, nothing excludes the possibility that the evaluation of the first and second conditions is carried out in parallel in a continuous manner (i.e. as a background task). It is therefore understood that, in general, the invention covers all technically conceivable embodiments in which two distinct conditions based on contextual data are evaluated and in which the transmission of an alert signal depends on the determination results respectively associated with the first and second conditions.

It further follows from the above that whenever a threshold is used in the evaluation of a condition, that threshold can be fixed (i.e. a given threshold) or not (i.e. a dynamic threshold). Considering a dynamic threshold is advantageous in that it allows the result of the evaluation of the other condition to be taken into account. For example, if we consider that the first condition concerns the driver's attention, and that the second condition concerns the distance d between the first and second vehicles, then it can be envisaged that if the driver's attention is judged to be highly focussed towards the rear, then it is possible to decrease the threshold associated with the distance d.

It has also been considered so far that the contextual data acquisition means are not part of the tailgating alert system. However, such provisions are not limiting to the invention, and nothing excludes the possibility of considering embodiments in which the tailgating alert system includes said contextual data acquisition means.

## Claims

1. A method for alerting a driver of a first vehicle (100), the method being performed by a tailgating system alert (110) equipping the first vehicle and comprising the steps of:
- detecting (300) a second vehicle (200) located behind the first vehicle,
- determining (310) whether or not a first condition is met based on contextual data associated with the first vehicle and/or the second vehicle,
- determining (320) whether or not a second condition different from the first condition is met based on contextual data associated with the first vehicle and/or the second vehicle,
- transmitting or not (330) at least one alert signal to the driver depending on the determination results respectively associated with the first and second conditions.

2. The method according to claim 1, wherein the first condition is met if a distance and/or a time-to-collision indicator and/or a time headway indicator between the first and second vehicles is below a threshold.

3. The method according to any one of claims 1 to 2, wherein said at least one alert signal comprises at least one of an audio, visual or haptic alert signal.

4. The method according to any one of claims 1 to 3, wherein the second condition is met if the first vehicle is able to accelerate, the contextual data comprising at least one of:
- an indicator of a speed limit for the first vehicle,
- an indicator of at least one obstacle detected in front of the first vehicle,
- an indicator of at least one road event detected on the path of the first vehicle,
and wherein:
- if the second condition is met, no alert signal is transmitted, or
- if the second condition is met, at least one alert signal is transmitted with a lower intensity and/or with a later transmission time than the intensity and/or transmission time used when the second condition is not met.

5. The method of any one of claims 1 to 4, wherein the second condition is met if the first vehicle is able to change lane, the contextual data comprising at least one of:
- an indicator of another vehicle detected in a lane adjacent to the lane of the first vehicle,
- an indicator of ground markings detected for the first vehicle's lane and/or for one or more lanes distinct from the first vehicle's lane,
- an indicator of overtaking rules for the first vehicle,
and wherein:
- if the second condition is met, no alert signal is transmitted, or
- if the second condition is met, at least one alert signal is transmitted with a lower intensity and/or with a later transmission time than the intensity and/or transmission time used when the second condition is not met.

6. The method according to any one of claims 1 to 5, wherein the second condition is met if the second vehicle is changing or intends to change lane, the contextual data comprising at least one of:
- an indicator of a blinker activation by the second vehicle,
- an indicator of a lane change of the second vehicle,
- an indicator of a predicted lane change for the second vehicle,
and wherein:
- if the second condition is met, no alert signal is transmitted, or
- if the second condition is met, at least one alert signal is transmitted with a lower intensity and/or with a later transmission time than the intensity and/or transmission time used when the second condition is not met.

7. The method according to any one of claims 1 to 6, wherein the second condition is met if an attention level of the driver of the first vehicle is above a threshold, the contextual data comprising at least one of:
- an indicator of an active gaze of the driver of the first vehicle on the rear road,
- an indicator of an active gaze of the driver of the first vehicle on the front road,
and wherein :
- if the second condition is met, no alert signal is transmitted, or
- if the second condition is met, at least one alert signal is transmitted with a lower intensity and/or with a later transmission time than the intensity and/or transmission time used when the second condition is not met.

8. The method according to claim 7, wherein the active gaze to the rear or front road is evaluated by comparing a time between two driver gazes to the rear or front of the first vehicle.

9. The method according to any one of claims 1 to 8, wherein the second condition is met if the speed of the first vehicle differs from a threshold, the contextual data comprising an indicator of the speed of the first vehicle, and wherein:
- if the second condition is met due to the speed of the first vehicle being above said threshold, at least one alert signal is transmitted with a first transmission time earlier than the transmission time used in case the second condition is not met, or
- if the second condition is met due to a speed of the first vehicle below said threshold, at least one alert signal is transmitted with a second transmission time later than the transmission time used in case the second condition is not met.

10. The method according to any one of claims 1 to 9, wherein the second condition is met if degraded environmental conditions for driving are detected, the contextual data comprising at least one of:
- an indicator of a detected night time,
- an indicator of detected rain,
- an indicator of detected snow,
- an indicator of detected fog,
- an indicator of degraded visibility,
and wherein, if the second condition is met, at least one alert signal is transmitted with a higher intensity and/or with an earlier transmission time than the intensity and/or transmission time used when the second condition is not met.

11. The method according to any one of claims 1 to 10, wherein the second condition is met if the second vehicle belongs to a group of given vehicles, the contextual data comprising at least one of:
- an indicator of the second vehicle belonging to a special group comprising, for example, an ambulance, a fire brigade vehicle, a police vehicle,
- an indicator of the second vehicle identified as having activated flashing lights,
and wherein, if the second condition is met, at least one alert signal is transmitted with a higher intensity and/or with an earlier transmission time than the intensity and/or transmission time used when the second condition is not met.

12. A computer program comprising instructions which, when the program is executed by a computer, cause the computer to perform a method according to any one of claims 1 to 11.

13. A computer-readable medium comprising instructions which, when executed by a computer, cause the computer to perform a method according to any one of claims 1 to 11.

14. A tailgating alert system (110) comprising means configured to perform a method according to any of claims 1 to 11.

15. A vehicle (100) comprising a tailgating alert system according to claim 14.

## Amended claims

### Amended claims in accordance with Rule 137(2) EPC.

1. A method for alerting a driver of a first vehicle (100), the method being performed by a tailgating system alert (110) equipping the first vehicle and comprising the steps of:
- detecting (300) a second vehicle (200) located behind the first vehicle,
- determining (310) whether or not a first condition is met, the first condition being met if a distance and/or a time-to-collision indicator and/or a time headway indicator between the first and second vehicles is below a threshold,
- if the first condition is met, determining (320) whether or not a second condition different from the first condition is met based on contextual data associated with the first vehicle and/or the second vehicle,
wherein, if the second condition is met, the method further comprises a step of transmitting (330) at least one alert signal to the driver with a lower intensity and/or with a later transmission time than the intensity and/or transmission time used when the second condition is not met.

2. The method according to claim 1, wherein said at least one alert signal comprises at least one of an audio, visual or haptic alert signal.

3. The method according to any one of claims 1 to 2, wherein the second condition is met if the first vehicle is able to accelerate, the contextual data comprising at least one of:
- an indicator of a speed limit for the first vehicle,
- an indicator of at least one obstacle detected in front of the first vehicle,
- an indicator of at least one road event detected on the path of the first vehicle.

4. The method of any one of claims 1 to 3, wherein the second condition is met if the first vehicle is able to change lane, the contextual data comprising at least one of:
- an indicator of another vehicle detected in a lane adjacent to the lane of the first vehicle,
- an indicator of ground markings detected for the first vehicle's lane and/or for one or more lanes distinct from the first vehicle's lane,
- an indicator of overtaking rules for the first vehicle.

5. The method according to any one of claims 1 to 4, wherein the second condition is met if the second vehicle is changing or intends to change lane, the contextual data comprising at least one of:
- an indicator of a blinker activation by the second vehicle,
- an indicator of a lane change of the second vehicle,
- an indicator of a predicted lane change for the second vehicle.

6. The method according to any one of claims 1 to 5, wherein the second condition is met if an attention level of the driver of the first vehicle is above a threshold, the contextual data comprising at least one of:
- an indicator of an active gaze of the driver of the first vehicle on the rear road,
- an indicator of an active gaze of the driver of the first vehicle on the front road.

7. The method according to claim 6, wherein the active gaze to the rear or front road is evaluated by comparing a time between two driver gazes to the rear or front of the first vehicle.

8. The method according to any one of claims 1 to 7, wherein the second condition is met if the speed of the first vehicle is below a threshold, the contextual data comprising an indicator of the speed of the first vehicle, and wherein, if the second condition is met, at least one alert signal is transmitted with a transmission time later than the transmission time used in case the second condition is not met.

9. A computer program comprising instructions which, when the program is executed by a computer, cause the computer to perform a method according to any one of claims 1 to 8.

10. A computer-readable medium comprising instructions which, when executed by a computer, cause the computer to perform a method according to any one of claims 1 to 8.

11. A tailgating alert system (110) comprising means configured to perform a method according to any of claims 1 to 8.

12. A vehicle (100) comprising a tailgating alert system according to claim 11.
